# EUROPEAN PATENT APPLICATION

(11) **EP 4 799 961 A1**
(43) Date of publication of application: **02.09.2026**
(21) Application number: 25160763.6
(22) Date of filing: 27.02.2025
(51) Int. Cl.: B65G 11/02, B07C 5/36, B65G 47/44, B65G 47/71, B65G 1/04, B65G 1/137

(54) **ITEM SORTING AND RETRIEVAL**

(71) Applicant: AutoStore Technology AS, 5578 Nedre Vats (NO)
(72) Inventor: LØVLAND, Jan Bjørge, 5578 Nedre Vats (NO); IVARJORD, Åsmund, 5578 Nedre Vats (NO)
(74) Representative: Kilburn & Strode LLP

(57) **Abstract**

The disclosure relates to a sorting apparatus (802) for use in an automated storage and retrieval system, the apparatus comprising a first ramp (804) configured to guide, in a first direction, an item received from the storage system, and a second ramp (806) configured to guide, in a second direction different from the first direction, an item received from the storage system.

## Description

### TECHNICAL FIELD

The disclosure relates to item sorting and retrieval. More particularly, it relates to a sorting apparatus, a positioning apparatus, an automated storage and retrieval system comprising the sorting apparatus and/or the positioning apparatus, and methods for sorting or positioning items using the sorting apparatus and/or the positioning apparatus.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In order to remove an item from the grid, the item must be removed from the container in which it is stored. A known method for removing an item from a container comprises delivering the container in which the item is stored to a port at the periphery of the grid, at which point items within the container can be picked, via an opening in the top of the container, by human operators and/or robotic arms.

Similarly, a known method for arranging items in a container stored in the grid involves removing the container from the grid and then arranging the items in the container by a human operator and/or a robotic arm before returning the container back to the grid.

The use of robotic arms can be expensive, and human operators may be exposed to potential safety hazards.

### SUMMARY

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a sorting apparatus suitable for use in the systems of Figs. 1 and 8;
Figs. 6A to 6D show alternatively-shaped sorting apparatuses suitable for use in the systems of Figs. 1 and 8;
Fig. 6E shows a sorting apparatus comprising a divider, which is suitable for use in the systems of Figs. 1 and 8;
Fig. 7 shows a positioning apparatus suitable for use in the systems of Figs. 1 and 8;
Fig. 8 shows an automated storage and retrieval system comprising a sorting apparatus and a positioning apparatus; and
Fig. 9 shows a flow chart of a method of sorting a plurality of items in an automated storage and retrieval system.

### DETAILED DESCRIPTION

In overview, the disclosure relates to a sorting apparatus for use in an automated storage and retrieval system. It also relates to a positioning apparatus for use in an automated storage and retrieval system. The disclosure also relates to methods for sorting and/or positioning items in an automated storage and retrieval system using the sorting apparatus and/or positioning apparatus.

The sorting apparatus is arranged to receive an item (e.g., dropped from above) and to guide the item in one of a plurality of directions. The sorting apparatus guides the item in a particular direction by receiving the item onto one of a plurality of ramps, each of which is arranged to guide the item in a particular direction. In use, it may be situated in a cell of an automated storage and retrieval system so that it can direct items within the automated storage and retrieval system.

By dropping items onto a sorting apparatus situated in an automated storage and retrieval system, the items may be sorted into two or more containers, for example. By dropping the items onto the sorting apparatus, the items may be sorted into one or more containers for retrieval without human intervention and the use of expensive equipment such as robotic arms, and without having to transport all the items out of the grid. In this way, general efficiency of the automated storage and retrieval system may be improved.

In more detail, the sorting apparatus may be used to retrieve a single item from a container stored in the storage grid. First, the items in the container may be dropped onto the sorting apparatus so that the items are guided in either a first or second direction towards a first or second container, respectively. This may distribute the items approximately equally across the first and second containers. The process may now be repeated but with the items of, for example, the first container dropped onto the sorting apparatus, until a container with only a single item remains. This container and its item may then be transported away for further processing or retrieval from the storage grid. In a similar manner, the sorting apparatus may be used to retrieve any desired number of items from containers stored in the storage grid.

The positioning apparatus disclosed herein may be used in conjunction with a sorting apparatus or may be used independently. In general, the positioning apparatus is arranged to guide items that are placed in the positioning apparatus. Thus, an item placed in the positioning apparatus is guided in a particular direction or towards a particular area. To this end, the positioning apparatus may comprise a funnel arranged to guide an item placed in the top of the funnel.

The positioning apparatus may be situated in a cell of the storage grid of an automated storage and retrieval system. A container may be situated in a cell below the positioning apparatus, so that items placed into the positioning apparatus are guided towards a particular area of the container. For example, the positioning apparatus and container may be arranged so that items are generally centred within the container.

Items may be placed in the positioning apparatus using an item deposition means such as a titling mechanism. In this way, items in containers in a storage grid may be arranged without human intervention and without the use of expensive equipment such as robotic arms.

The apparatus and methods described herein can be used to improve the retrieval of items from containers to provide an improved (e.g., more efficient and/or more productive) automated storage and retrieval system.

The preceding overview is provided to introduce in simplified form a selection of concepts that are further described herein. The overview is not intended to identify key or essential features of the invention.

### Automated storage and retrieval system overview

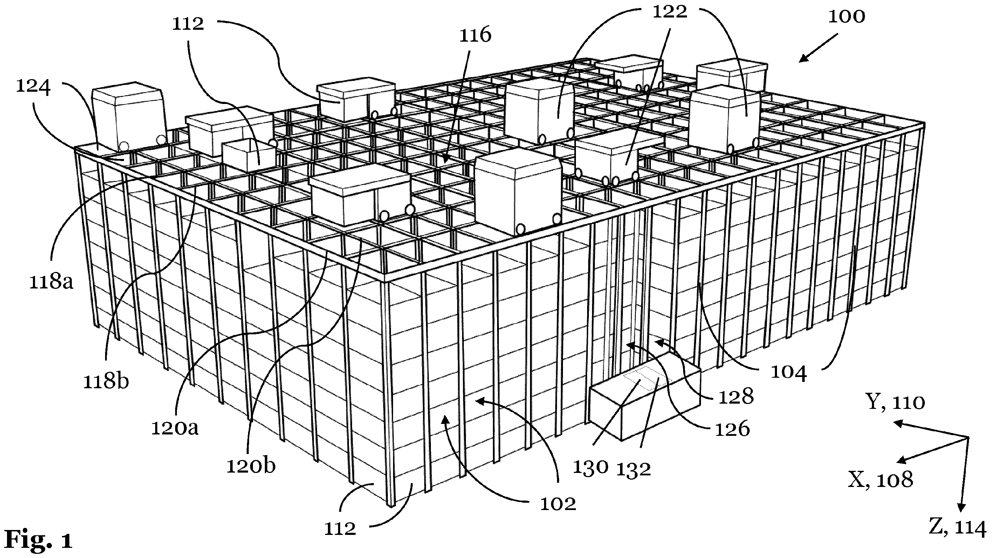

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

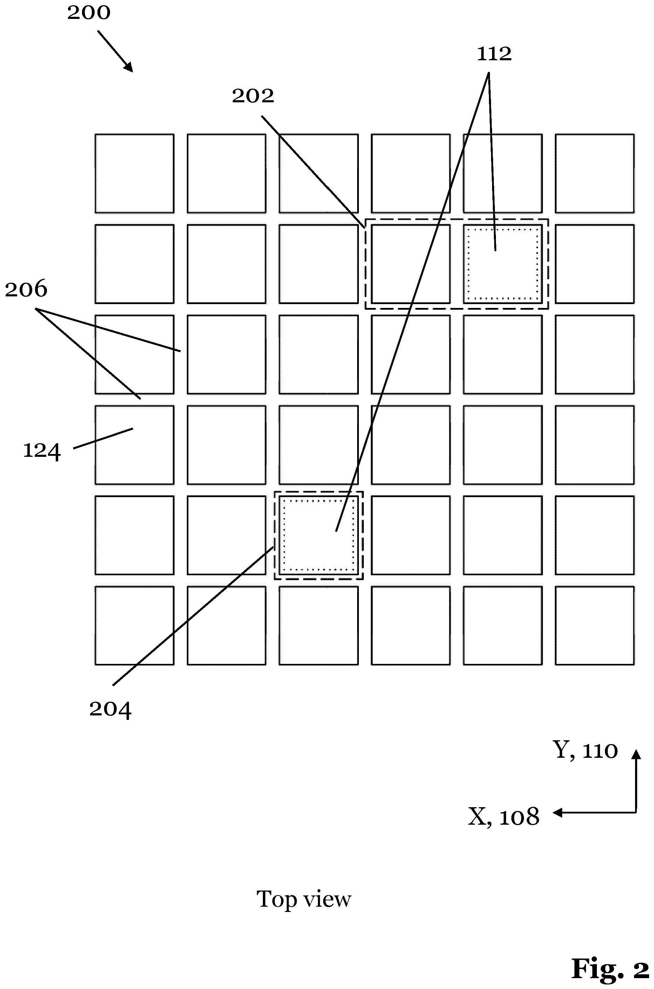

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

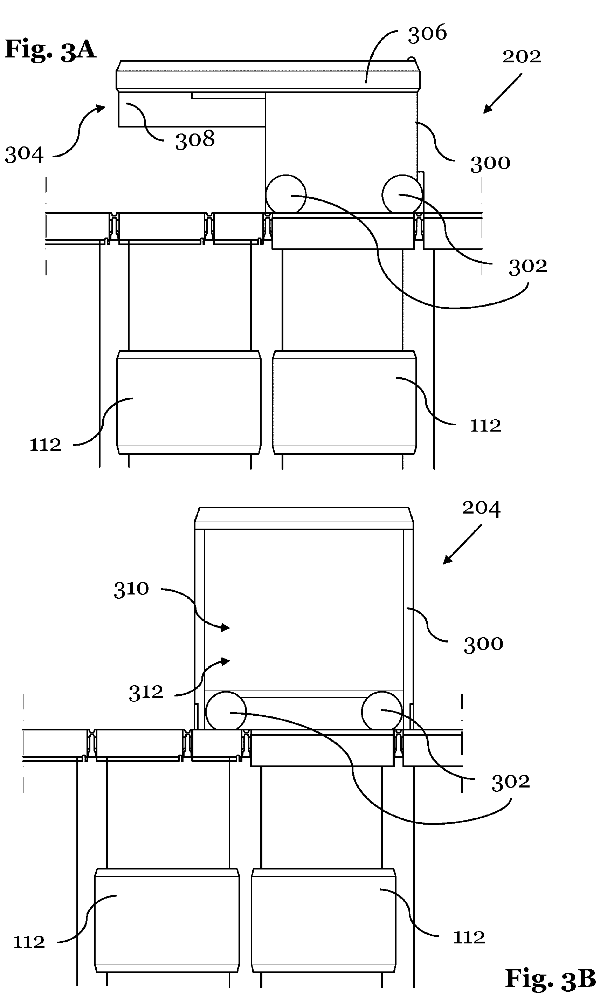

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

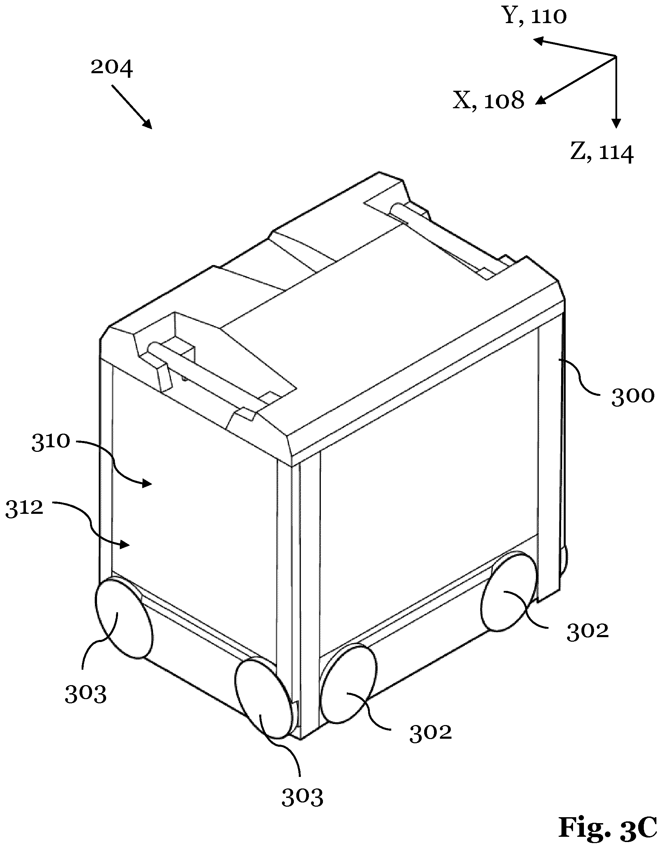

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

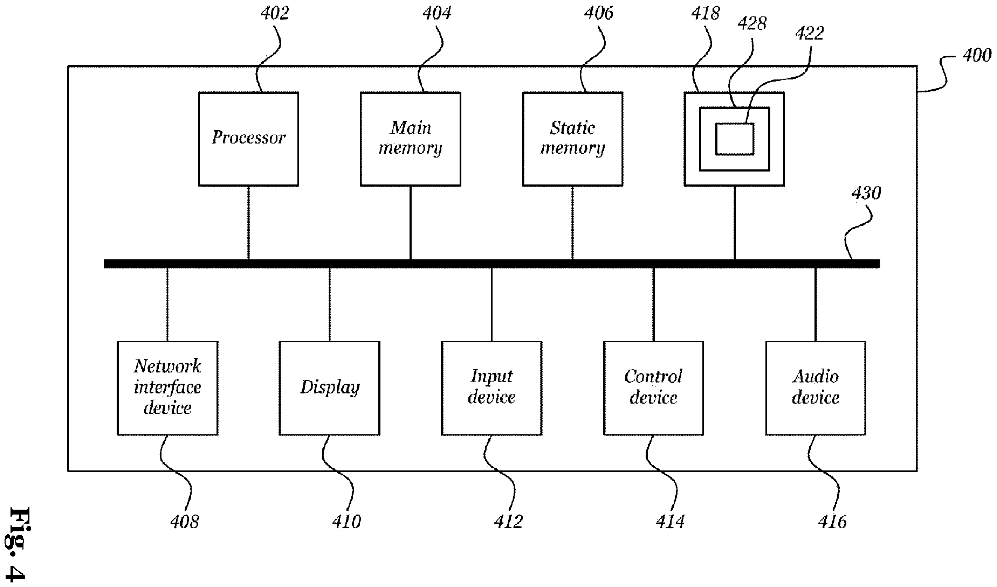

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Sorting apparatus

As described above, an automated storage and retrieval system may store containers in a storage grid. The automated storage and retrieval system may store a large number of containers, for example hundreds of containers, each including a plurality of items. When it is desired to retrieve a specific item from the storage grid, the item must be removed from the container in which it is stored. This often involves transporting the container to a position outside the storage grid where it can be picked from the container (e.g., by a human operator or a robotic picking arm), and then reintroducing the container back into the storage grid. In order to reduce costs and to improve safety and efficiency, it is desirable that items can be retrieved from containers without the use of expensive equipment and with minimal human intervention. In particular, it is desirable that an item can be retrieved from a container without the use of equipment such as robotic arms, since this equipment can be expensive. Indeed, a single robotic arm may cost several times more than the storage grid itself, for example.

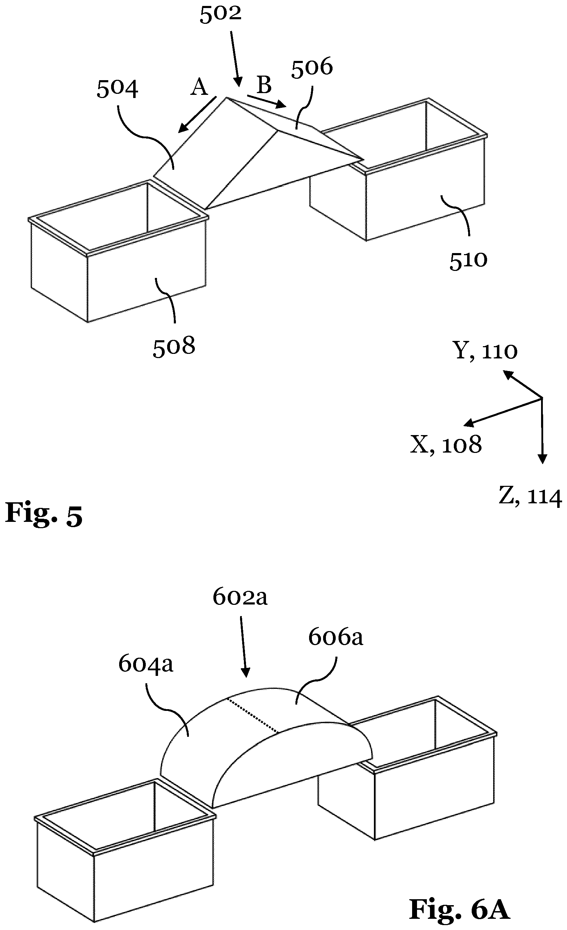

Fig. 5 depicts a sorting apparatus 502 for use in a storage system, such as the automated storage and retrieval system described with reference to Fig. 1. In general terms, the sorting apparatus 502 of Fig. 5 is arranged so that an item received from the storage system onto the sorting apparatus 502 is guided in one of a plurality of directions. For example, when the sorting apparatus 502 is situated within a cell of a storage grid 100 of the storage system, then the sorting apparatus 502 may guide the item towards one or more adjacent or nearby cells of the storage grid 100.

The sorting apparatus 502 comprises a first ramp 504 and a second ramp 506. The first and second ramps 504, 506 may also be referred to as first and second inclines (or inclined portions) respectively.

The first and second ramps 504, 506 are configured to guide an item received from the storage system in a particular direction. In particular, the first ramp 504 is configured to guide an item received from the storage system in a first direction A, and the second ramp 506 is configured to guide an item received from the storage system in a second direction B. Thus, an item received from the storage system onto the first ramp is guided in the first direction A, and an item received from the storage system onto the second ramp is guided in the second direction B.

The first and second directions A, B are different. For example, the first and second directions A, B may be opposite or substantially opposite (i.e., facing away from each other, e.g., the first direction A facing north and the second direction B facing south) or substantially perpendicular (i.e., at approximately a right angle to each other, e.g., the first direction A facing north and the second direction B facing east or west). In general, an angle between the first direction A and second direction B may be between 90 and 180 degrees inclusive. In this way, if the sorting apparatus 502 is situated within the storage grid 100, the first ramp 504 may guide an item in the first direction A towards one cell of the storage grid 100 (e.g., towards a first cell neighbouring the cell in which the sorting apparatus 502 is situated), and the second ramp 506 may guide an item in the second direction B towards another cell of the storage grid 100 (e.g., towards a second cell also neighbouring the cell in which the sorting apparatus 502 is situated, wherein the second cell is possibly opposite, perpendicular to, or at any other angle to the first cell relative to the sorting apparatus 502).

Although the preceding and following discussion focuses on sorting apparatuses comprising two ramps, the skilled person will appreciate that the sorting apparatuses described herein may function in the same or a similar manner using a different number of ramps. For example, a sorting apparatus may comprise three ramps. A first ramp for instance may guide an item in a first direction, a second ramp may guide an item in a second direction opposite the first direction, and a third ramp may guide an item in a third direction perpendicular to the first and second directions. Alternatively, a sorting apparatus may comprise four ramps. For example, a first ramp may guide an item in a first direction, a second ramp may guide an item in a second direction opposite the first direction, a third ramp may guide an item in a third direction perpendicular to the first and second directions, and a fourth ramp may guide an item in a fourth direction perpendicular to the first and second directions and opposite the third direction.

Returning to Fig. 5, an item received onto the first or second ramp 504, 506 may be guided in the first or second direction A, B respectively due to the shape and/or positioning of the ramps 504, 506. For example, as depicted in Fig. 5, the first and second ramps 504, 506 may have a negative incline (with respect to a vertical plane, corresponding to the Y-Z plane as defined in Fig. 5), such that an item received onto the first ramp 504 is moved in the first direction A by a combination of the force of gravity and the force exerted on the item through its contact with an upper surface of the first ramp 504. An item received onto the second ramp 506 may be moved in the second direction B in a similar manner. In general terms, the first and second ramps 504, 604a-e, 506, 606a-e may be disposed on opposing sides of a vertical plane and may be downwardly sloped with respect to the vertical plane. The first and second ramps 504, 604a-e, 506, 606a-e may be downwardly sloped with respect to the vertical plane such that a respective end of the first and second ramps 504, 604a-e, 506, 606a-e that is proximal to the vertical plane is higher than a respective end of the first and second ramps 504, 604a-e, 506, 606a-e that is distal to the vertical plane.

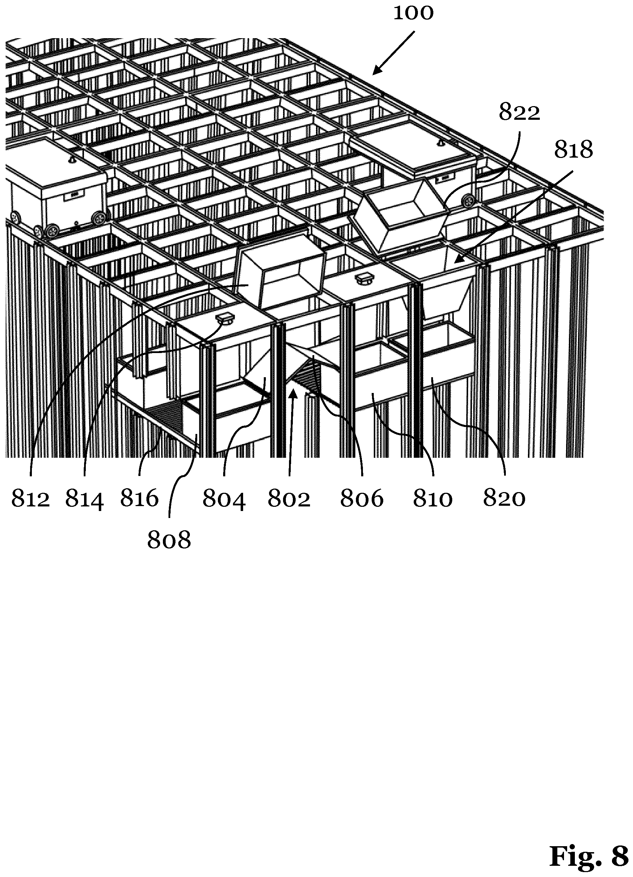

The first and second ramps 504, 506 of the sorting apparatus 502 depicted in Fig. 5 form a triangular prism. In detail, the first and second ramps 504, 506 each have an upper surface which forms a rectangle. One edge of the upper surface is positioned higher than the opposite edge, such that the upper surfaces of the first and second ramps 504, 506 have a negative incline with respect to a vertical Y-Z plane as shown in Fig. 5. As discussed above, it is a combination of the force of gravity and the force exerted on an item through its contact with the (negatively inclined) upper surfaces of the first and second ramps 504, 506 that causes the item to move in either the first of second direction A, B (along the X axis). With this in mind, the skilled person will appreciate that the first and second ramps 504, 506 need not be shaped like a triangular prism, as in Fig. 5, but may take on any shape with an appropriate incline. Similarly, the skilled person will appreciate that the sorting apparatus 502 of Fig. 5 need not necessarily have side faces and/or a bottom face e.g. the ramps may be formed from a single sheet of metal or other suitable material, as depicted in Fig. 8. Furthermore, the ramps do not need to be symmetrical with respect to one another.

Figs. 6A to 6D depict sorting apparatuses 602a-d with alternatively shaped first and second ramps 604a-d, 606a-d. The sorting apparatuses 602a-d described below with reference to Figs. 6A to 6D operate on the same principle as the sorting apparatus 502 described in relation to Fig. 5.

Fig. 6A depicts a sorting apparatus 602a whose first and second ramps 604a, 606a are each shaped like a wedge with a curved upper surface. When the first and second ramps 604a, 606a are adjacent as in Fig. 6A, together they form a semi-elliptical prism.

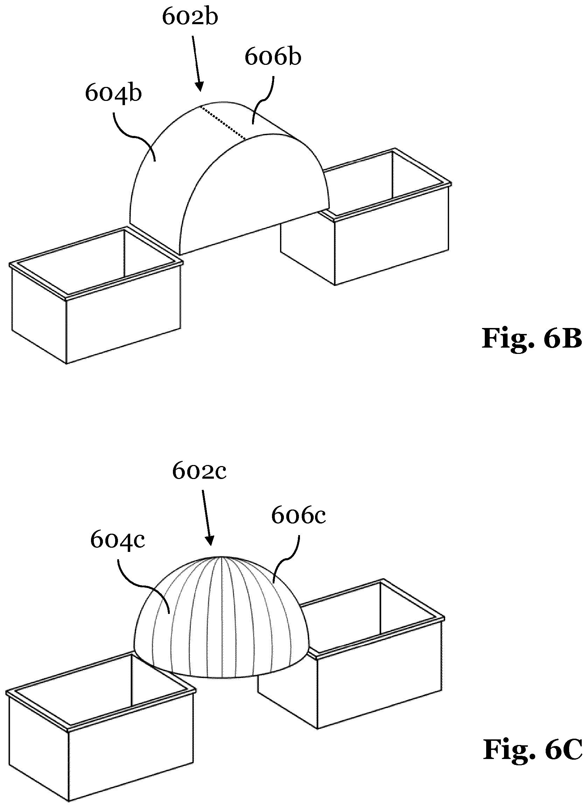

Fig. 6B depicts another sorting apparatus 602b whose first and second ramps 604b, 606b are each shaped like a wedge with a curved surface. When the first and second ramps 604b, 606b are adjacent as in Fig. 6B, together they form a semicylindrical prism.

Fig. 6C depicts a sorting apparatus 602c whose first and second ramps 604c, 606c are each shaped like a quarter sphere. When the first and second ramps 604c, 606c are adjacent as in Fig. 6C, together they form a hemisphere.

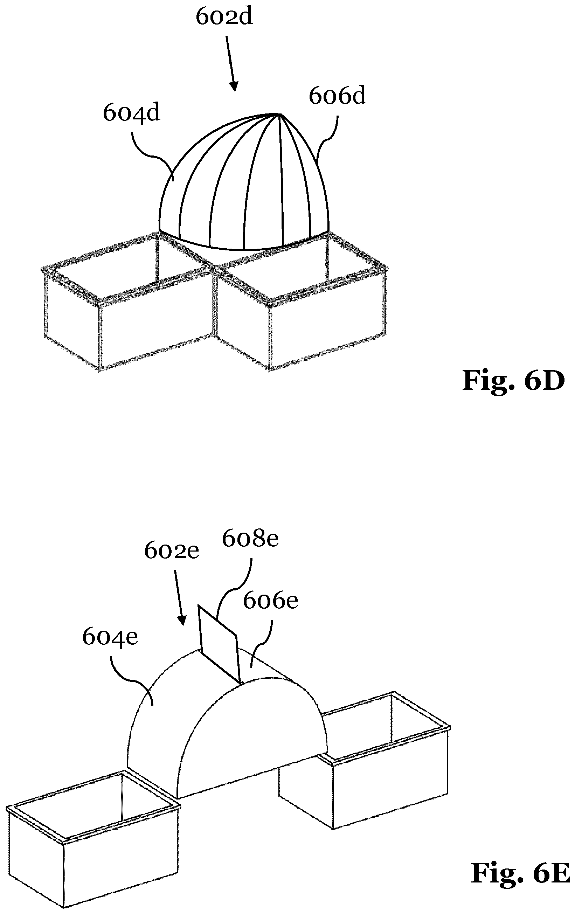

Fig. 6D depicts a sorting apparatus 602d whose first and second ramps 604d, 606d together from an octant (an eighth of a sphere or spheroid). In contrast to the above described ramp configurations that direct items in opposite directions, the ramp depicted in Fig. 6D is configured to direct items in perpendicular directions. As such, instead of being interposed by the ramps 604d, 606d, containers are placed at the bottom of adjacent sides of the sorting apparatus 602d.

Fig. 6E depicts a sorting apparatus 602e that is identical to the sorting apparatus 602b depicted in Fig. 6B except that the sorting apparatus 602e of Fig. 6E includes a divider 608e, which is described in more detail below.

As the skilled person will appreciate, in addition to the shapes of the first and second ramps 504, 604a-e, 506, 606a-e depicted in Fig. 5 and Figs. 6A-E, many other shapes may be used. In general terms, the first and second ramps 504, 604a-e, 506, 606a-e may form at least a plough shape, triangular prism, half-cylinder, elliptical half-cylinder, spherical octant or spheroidal octant.

The dimensions of the depicted first and second ramps 504, 604a-e, 506, 606a-e may also be adapted to suit the intended purpose of the sorting apparatus 502, 602a-e. For instance, the triangular-prism formed by first and second ramps 504, 506 of Fig. 5 may be lengthened (e.g., in the first and second directions A, B respectively) or the height of the prism may be reduced. Consequently, the slope of the first and second ramps 504, 506 may be reduced, thereby reducing a speed at which items received thereon are guided in the first or second direction A, B. This may be desirable when the sorting apparatus 502 is used to guide fragile items. Furthermore, the first and second ramps 504, 506 of Fig. 5 may be made wider (e.g., lengthened in one or more directions perpendicular to the first and second directions A, B) in order to accommodate larger items.

Each of the sorting apparatuses 502, 602a-e depicted in Figs. 5 and 6A-E may be suited for a particular purpose. For example, the sorting apparatuses 602a-e of Figs. 6A-E have first and second ramps 604a-e, 606a-e whose upper surface has an increasingly negative incline. That is, (the magnitude of) the slope of the upper surface of the first and second ramps 604a-e, 606a-e with respect to a horizontal plane increases from one end of the ramp to the other. In contrast, the upper surfaces of the first and second ramps 504, 506 of the sorting apparatus 502 of Fig. 5 has a constant slope. Thus, the sorting apparatuses 602a-e of Figs. 6A-E may be suited to guiding items that are substantially flat, such as packages containing books, which may be more likely to get stuck on the sorting apparatus 502 of Fig. 5.

The first and second ramps 504, 604a-e, 506, 606a-e may further comprise a raised portion (not shown) along sections of its perimeter (e.g., along its edges parallel to the first or second direction A, B). The raised portion may be arranged so that items being guided by the first or second ramp 504, 604a-e, 506, 606a-e are properly guided in the first or second direction A, B (e.g., along the entire length of the ramp, and then possibly into a container), and do not, for example, fall off a side of the ramp.

As depicted in Figs. 5 and 6A-E, the first and second ramps 504, 604a-e, 506, 606a-e are adjacent such that together they form the sorting apparatus 502, 602a-e. In particular, the first and second ramps 504, 604a-e, 506, 606a-e meet at (or are connected along) an edge or a point of their respective upper surfaces (e.g., the dashed lines in Figs. 6A and 6B, or the central upper point (or pole) of the hemispherical sorting apparatus 602c of Fig. 6C). This point or edge is referred to as the 'drop point'.

When an item is received onto the drop point, the item may fall in the first direction A towards the first ramp 504, 604a-e or in the second direction B towards the second ramp 506, 606a-e. The sorting apparatus 502, 602a-e may further comprise a divider 608e (as depicted in Fig. 6E, extending from the drop point between the first and second ramps 504, 604a-e, 506, 606a-e for example, such that an item received onto the sorting apparatus is guided by the divider 608e in either the first or second direction A, B. For example, an item dropped onto a top edge of the divider 608e may fall onto one side of the divider 608e or the other, thereby guiding the item in either the first or second direction A, B. Although the divider 608e of Fig. 6E is depicted as being rectangular in shape, the skilled person will appreciate that the divider 608e may take on many other forms, such as a pyramid shape or any other appropriate shape that causes an item to fall to one side of the divider 608e or another. Another effect of the divider is to reduce the likelihood of an item getting stuck at the top of the ramps.

The first and second ramps 504, 604a-e, 506, 606a-e and/or the divider 608e may be arranged so that an item received onto the sorting apparatus 502, 602a-e is approximately as likely to be guided in the first direction A by the first ramp 504, 604a-e as it is to be guided in the second direction B by the second ramp 506, 606a-e. In this way, when a plurality of items is dropped onto the sorting apparatus 502, 602a-e, approximately half of the plurality of items will be guided in the first direction A and the remaining items will be guided in the second direction B. Alternatively, the first and second ramps 504, 604a-e, 506, 606a-e and/or the divider 608e may be arranged so that an item received onto the sorting apparatus 502, 602a-e is more likely to be guided in the first direction A by the first ramp 504, 604a-e than it is to be guided in the second direction B by the second ramp 506, 606a-e, or vice versa. In this way, when a plurality of items is dropped onto the sorting apparatus 502, 602a-e, at least 95%, 90%, 80%, 70% or 60% of the plurality of items will be guided in the first direction A and the remaining items will be guided in the second direction B.

A similar effect may be achieved by dropping an item onto the sorting apparatus 502, 602a-e in a particular way. For example, if an item is dropped onto a portion of the sorting apparatus 502, 602a-e on or closer to the first ramp 504, 604a-e, then the item is more likely to be guided in the first direction A, whereas if the item is dropped onto a portion of the sorting apparatus 502, 602a-e on or closer to the second ramp 506, 606a-e, then the item is more likely to be guided in the second direction B. All else being equal (e.g., if the first and second ramps 504, 604a-e, 506, 606a-e are identically shaped), an item that is dropped as close as possible to the drop point of the sorting apparatus 502, 602a-e is approximately as likely to be guided in the first direction A as it is to be guided in the second direction B.

The sorting apparatuses 502, 602a-e described herein may be used to guide items received thereon into one or more containers (e.g., the storage containers 112 of the automated storage and retrieval system depicted in Fig. 1). For example, as depicted in Figs. 5 and 6A-E, a sorting apparatus 502, 602a-e may be positioned near (e.g., between) two containers 508, 510 such that an end of the first ramp 504, 604a-e is disposed adjacent to or above an opening (e.g., a top opening) of a first container 508 and an end of the second ramp 506, 606a-e is disposed adjacent to or above an opening (e.g., a top opening) of a second container 510. In other words, the containers 508, 510 may be interposed by the first and second ramps 504, 604a-e, 506, 606a-e. Alternatively, instead of being interposed by the ramps, containers may be placed at the bottom of adjacent sides of the sorting apparatus, as depicted in Fig. 6D.

Thus, an item received onto the sorting apparatus 502, 602a-e is guided either in the first direction A and into the first container 508 or in the second direction B and into the second container 510. As discussed above, a sorting apparatus may comprise more than two ramps, in which case the sorting apparatus may guide an item received thereon into one of more than two containers. For example, if the sorting apparatus comprises four ramps, then the sorting apparatus may guide an item received thereon into one of the four containers, one container for each ramp of the sorting apparatus.

As the skilled person will appreciate, although the first and second ramps 504, 604a-e, 506, 606a-e of the sorting apparatuses depicted in Figs. 5 and 6A-E are positioned such that an edge of the ramps are adjacent to a top opening of the containers 508, 510, items may similarly be moved into containers 508, 510 if the sorting apparatus 502, 602a-e is alternatively positioned. For example, if the containers 508, 510 have a side opening, then the sorting apparatus 502, 602a-e may be positioned such that an edge of the first and second ramps 504, 604a-e, 506, 606a-e is disposed at an entrance of the side openings of the containers 508, 510, so that items received onto the sorting apparatus 502, 602a-e are guided into the first container 508 or second container 510 through a respective side opening.

### Positioning apparatus

In many cases, the way in which items stored in a storage grid 100 are stored in the containers is not of particular importance. However, in some cases it is desirable that items stored in a container are positioned or arranged in a certain way. For example, it may be desirable that items are substantially centred within the container. This may be particularly important when items stored in a container are sorted using the sorting apparatuses 502, 602a-e describe above. For example, if the items in a container are not centred but instead are biased to one side or another, and the container is tilted so that its items are received onto the sorting apparatus 502, 602a-e, then the items may naturally tend towards falling on the first ramp 504, 604a-e over the second ramp 506, 606a-e, or vice versa. This may in turn cause significantly more items to be guided in, for example, the first direction A than in the second direction B. In some circumstances, however, it is desirable that an item received onto the sorting apparatus 502, 602a-e is approximately as likely to be guided in the first direction A by the first ramp 504, 604a-e as it is to be guided in the second direction B by the second ramp 506, 606a-e.

In order to arrange items in a container in a particular manner, the container may be transported (e.g., by a robotic container-handling vehicle 122) out of the storage grid 100 to a position where a human operator and/or robotic arm may (re)arrange the items in the container. However, this may expose human operators to safety hazards, require expensive equipment, and significant amounts of time may be spent transporting the container out of the storage grid 100 and returning it back to the storage grid 100 once its items have been (re)arranged. This solution is therefore inefficient and costly.

In view of these and associated problems, disclosed herein is a positioning apparatus.

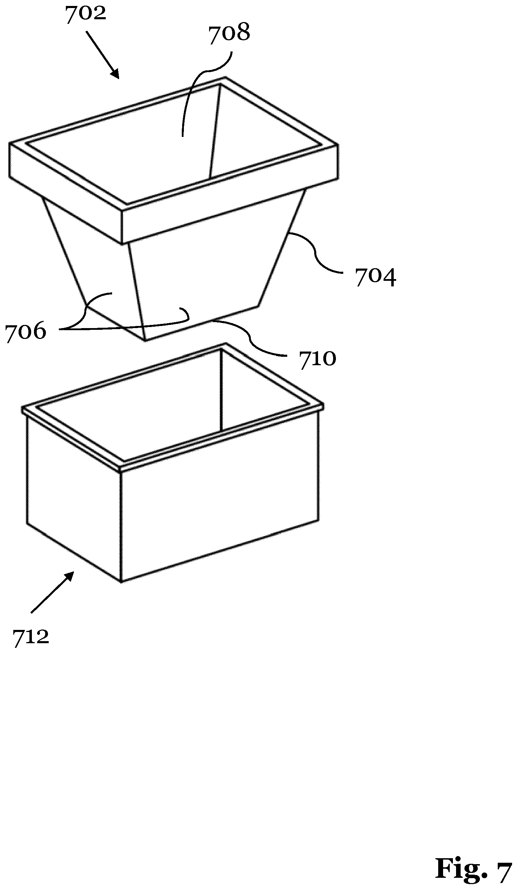

Fig. 7 depicts a positioning apparatus 702 suitable for use in an automated storage and retrieval system (e.g., the system of Figs. 1 or 8) and for arranging items in a container of the automated storage and retrieval system.

The positioning apparatus 702 comprises a funnel 704 defined by one or more sides 706. The funnel 704 is arranged to guide an item placed in the top of the funnel 704. The sides 706 of the funnel 704 are arranged such that one end (the 'wide end' 708, also known as an 'input end') of the funnel 704 is wider than the other end (the 'narrow end' 710, also known as an 'output end'). For example, as depicted in Fig. 7, the funnel 704 may be defined by four rectangular sides 706 which are inwardly-sloping such that a size (e.g., a width and/or length) of a cross section of the funnel 704 decreases from the wide end 708 to the narrow end 710.

More specifically, the funnel 704 depicted in Fig. 7 resembles a trapezoidal prism or a pyramid frustrum. That said, the skilled person will appreciate that the funnel 704 may take the form of any other appropriate shape comprising two open ends, one bigger than the other. For example, the funnel 704 may resemble a triangular frustrum or a truncated cone. The input and output ends may be concentric, or they may be off-centred with respect to each other.

The positioning apparatus 702 is arranged such that an item received by the wide end 708 of the funnel 704 falls through the funnel 704 from the wide end 708 to the narrow end 710, and from there to a position below the narrow end 710. Accordingly, by disposing the narrow end 710 of the positioning apparatus 702 above a target area, items placed in the positioning apparatus 702 may be guided by the funnel 704 towards the target area.

As depicted in Fig. 7, the target area may be a container 712. More particularly, the target area may be a centre of the container 712. In this way, items placed in the positioning apparatus 702 may be guided towards the centre of the container 712. In other words, items placed in the positioning apparatus 702 may be substantially centred within the container 712.

The positioning apparatus 702 described herein may be used in an automated storage and retrieval system, such as the storage system described in relation to Figs. 1 and 8. In general terms, the positioning apparatus 702 may be configured to be received in a cell of an automated storage and retrieval system. For example, the positioning apparatus 702, 818 may be situated within a cell of a storage grid 100 of the automated storage and retrieval system, as depicted in Fig. 8. More specifically, the positioning apparatus 702, 818 may be disposed in a first cell of the storage grid 100 and a container 820 may be disposed in a second cell of the storage grid 100, wherein the second cell is lower than the first cell. For instance, the second cell may be below the first cell, such that items received by the positioning apparatus 702, 818 are guided towards the container 820. While Fig. 8 depicts a system 100 with both a positioning apparatus 702 and a sorting apparatus 502, as per the aspects and examples disclosed herein, the system 100 can be provided without one of a positioning apparatus 702 and a sorting apparatus 502.

The positioning apparatus 702, 818 may be situated at a position inside the storage grid 100, for example at an area of the storage grid 100 where a container 822 is brought (e.g., by a robotic container-handling vehicle 122) so that its items may be received by the positioning apparatus 702, 818. The positioning apparatus 702, 818 may cause the items originally stored in the container 822 to be positioned in a particular manner (e.g., centred or substantially centred, or off-centre) in a second container 820. The container 822 and/or the second container 820 may then be returned for storage within the storage grid 100. Additionally or alternatively, the positioning apparatus 702, 818 may be situated at an area of the storage grid 100 intended for retrieving containers from and adding containers to the storage grid 100. Thus, the positioning apparatus 702, 818 may for example be situated at or near a delivery port of the automated storage and retrieval system, so that items stored in a container may be (re)arranged before removing the container from or adding the container to the storage grid 100.

### Sorting and positioning items in an automated storage and retrieval system

The sorting apparatuses 502, 602a-e and the positioning apparatus 702 described herein may be used as part of a larger process to retrieve items from the storage grid 100 of an automated storage and retrieval system. In general terms, the sorting apparatus 502, 602a-e may be used to separate items from a container into two auxiliary containers. The sorting apparatus 502, 602a-e is then used in a similar manner to separate out items from at least one of the two auxiliary containers. This sorting process is repeated until a container is left with only a single item or any other desired number of items. The container including the desired number of items may then be transported out of the storage grid 100 to fulfil an order, for example.

At any point in this process, the positioning apparatus 702 may be used to position items within a container. For example, before the sorting apparatus 502, 602a-e is used to separate the items in a container, the positioning apparatus 702 may first be used to substantially centre the items in the container. This may be done for example before the container is tilted over the sorting apparatus 502, 602a-e, so that when the container is tilted, the items that were stored therein are received onto a central portion of the sorting apparatus 502, 602a-e. Additionally or alternatively, the positioning apparatus 702 may be positioned above the sorting apparatus 502, 602a-e. Thus, it directs items towards the centre of the sorting apparatus 502, 602a-e, increasing the predictability of how the sorting apparatus 502, 602a-e divides a plurality of items. Additionally or alternatively, the positioning apparatus 702 may be used for example near the end of the process in order to consolidate items that have been sorted by the sorting apparatus 502, 602a-e into a container for storage or further processing. The positioning apparatus 702 may also be used independently of any sorting process. In particular, the positioning apparatus 702 may be used in an automated storage and retrieval system that does not include any sorting apparatus 502, 602a-e.

To illustrate the above-described sorting process in more detail, the following example is presented. The storage grid 100 may store a first container 812 including ten items. It may be desired that a single item is retrieved from the first container 812. In accordance with the above-described process, the ten items in the first container 812 may first be dropped onto the sorting apparatus 802, which guides the items in either a first direction A towards an initially empty second container 808 or in a second direction B towards an initially empty third container 810. As a result, the second container 808 may now include five of the ten items, and the third container 810 may now include the remaining five items. The sorting process is now repeated, but with, for example, the items of only the second container 808 dropped onto the sorting apparatus 802. Thus, the items of the second container 808 are dropped onto the sorting apparatus 802, separating the five items in the second container 808 into two other containers, one of which now includes for example two items and the other of which now includes the remaining three items (or, if the third container 810 was kept in place and not swapped out for a new container, then the third container 810 may now include eight items). This is once again repeated with the container including two items. The two items of this container are dropped onto the sorting apparatus 802, thereby separating the two items into two containers, each receiving one item. One or more of these containers (each including only a single item that was originally stored in the first container 812) may now be transported, by a robotic container-handling vehicle 122 for example, to a port of the storage grid 100 where the container and item may be further processed. Features of an automated storage and retrieval system that is arranged to carry out this process are now described in more detail with reference to Fig. 8.

The sorting apparatuses 502, 602a-e described herein may be configured to be received in a cell or a port of an automated storage and retrieval system, such as the system described in relation to Fig. 1. That is, an automated storage and retrieval system may comprise any of the sorting apparatuses 502, 602a-e described in relation to Figs. 5 and 6A-E. For example, as depicted in Fig. 8, a sorting apparatus 802 may be situated within a first cell of a storage grid 100, such that the first ramp 504, 604a-e is configured to guide an item received thereon in a first direction A towards a second cell of the storage grid 100 and the second ramp 506, 606a-e is configured to guide an item received thereon in a second direction B towards a third cell of the storage grid 100. The second and third cells may be adjacent (e.g., in a horizontal direction) to the first cell. For example, the second cell may be adjacent to the first cell and the third cell may be adjacent to the first cell on an opposite or perpendicular side to the second cell relative to the first cell. The second and third cells may be displaced vertically from the first cell. For example, as depicted in Fig. 8, the second and third cells are offset in the vertical direction by the height of a cell, such that the second and third cells are lower than the first cell.

The second and third cells of the storage grid 100 may be arranged to receive first and second containers 808, 810 respectively, such that items received onto the sorting apparatus 802 are guided either in the first direction A towards the second cell and into the first container 808 or in the second direction B towards the third cell and into the second container 810.

In order to drop items from a container (e.g., the first container 812) onto the sorting apparatus 802, the automated storage and retrieval system may comprise an item deposition means (not shown). The item deposition means may be a tilting mechanism configured to tilt a container (e.g., the first container 812) so that items from the container fall out of the container and onto the sorting apparatus 802.

The tiling mechanism may comprise, for example, a motorised or pneumatic arm which, when actuated, makes contact with a bottom of the container (e.g., at an edge of the bottom of the container), causing the container to tilt and the items stored therein to fall out of the container and onto the sorting apparatus 802. In order for the container to tilt (rather than simply be moved, e.g., upwards) when the arm is actuated, one edge of the bottom of the container remains substantially fixed in place. The automated storage and retrieval system may therefore comprise a vice mechanism arranged to keep in place one edge of the bottom of the container when the container is being tilted by the tilting mechanism. Alternatively, the edge of the bottom of the container may comprise a groove or recess arranged to engage with a structure on which the container is supported, thereby keeping in place the edge of the bottom of the container when the container is being tilted.

If the automated storage and retrieval system comprises a positioning apparatus 818, then the system may comprise a further item deposition means for dropping items into the positioning apparatus 818. The item deposition means may be the same as or similar to that described above in relation to the sorting apparatus 802.

The automated storage and retrieval system may further comprise a first conveyor 816 configured to transport an item in the second cell out of the second cell. Similarly, the automated storage and retrieval system may further comprise a second conveyor configured to transport an item in the third cell out of the third cell. For example, the first conveyor 816 may be arranged to transport the second container 808 including the item out of the second cell to, for example, an adjacent cell of the storage grid 100. The second conveyor may similarly be arranged to transport the third container 810 including the item out of the second cell to an adjacent cell of the storage grid 100. The first and second conveyors 816 may comprise one or more rollers, one or more wheels, and/or one or more conveyor belts, which may be driven by, for example, one or more motors.

In accordance with the sorting process described above, the first conveyor 816 may transport the second container 808 to a position of the storage grid 100 where it can be raised and moved (e.g., by a robotic container-handling vehicle 122) to a position above the sorting apparatus 802, at which point the second container 808 may be tilted by the tilting mechanism so that the items stored by the second container 808 are received onto the sorting apparatus 802. Alternatively, if the second container 808 is determined to contain the desired number of items (e.g., a single item), then the first conveyor 816 may transport the second container 808 to a position of the storage grid 100 from where the second container 818 is ultimately delivered to for example a delivery port of the storage grid 100. Meanwhile, the second conveyor may transport the third container 810 to another position of the storage grid 100, such as back into a storage column of the storage grid 100 or to an area of the grid where items in the third container 810 will be consolidated into another container. Alternatively, the third container 810 may remain in place adjacent to the sorting apparatus 802 so that when the items of the second container 808 are dropped onto the sorting apparatus 802, the third container 810 may receive items that were stored in the second container 808 and which are guided by the sorting apparatus 802 in the second direction B towards the third container 810. In other configurations, the containers can be raised and moved (e.g., by a robotic container-handling vehicle 122) directly out of their cells, without the need for conveyors.

As discussed above, a container may be transported by the first or second conveyor 816 to different locations within the storage grid 100 depending on the number of items stored in the container. For example, if the container includes only a single item (i.e., the item that is desired to be retrieved, or any number of items desired to be retrieved), then the container may be transported to a delivery port, whereas if the container includes items that are not intended for retrieval, then the container may be transported towards the sorting apparatus 802 for further sorting. The automated storage and retrieval system may comprise a first camera (not shown) arranged to capture an image of an item in the second cell and/or a second camera (not shown) arranged to capture an image of an item in the third cell. The first and second cameras may be downward facing and positioned at or above the second and third cells respectively so that they are able to capture an image of an inside of a container in the second or third cell. For example, the first camera may be disposed at the position indicated by reference numeral 814 in Fig. 8, and the second camera may be disposed at an analogous position above the third cell, so that the first and second cameras may capture an image of an inside of the second and third containers 808, 810 respectively.

To increase the reliability of the camera when determining the number of items in a container, an area including the containers may be lit, reducing the presence of shadows. Although the storage grid 100 itself may be situated in a lit environment, the light source(s) may be positioned such that shadows are cast on the area of which an image is to be captured. In view of these and associated problems, the automated storage and retrieval system may comprise a light source 814 disposed in the second and/or third cell arranged to illuminate an inner volume of the respective cell. For example, as depicted in Fig. 8, a downward facing light source 814 may be disposed above the second and third cells in order to illuminate an inside of the second and third containers respectively. In this way, a more direct source of light is provided, thereby reducing or eliminating shadows cast on the area of which an image is to be captured.

The light source may be natural. For example, a cell of the storage grid 100 may comprise an opening or a window or other transparent portion through which sunlight may pass. More preferably, the light source may be artificial. For example, the light source may comprise any one of or any combination of: an incandescent bulb, halogen lamp, fluorescent lamp, light-emitting diode, organic light-emitting diode, infrared emitter, ultraviolet lamp, or any other appropriate source of light.

Once an image of an inside of a container 808, 810 has been captured, the image may be provided as input to an algorithm (e.g., a computer vision algorithm known to the skilled person) for determining a number of items in the container 808, 810. The container 808, 810 may then be transported (e.g., by a conveyor 816) to a location dependent on the number of items determined to be in the container 808, 810.

Although 'cameras' and 'images' in particular are referred to above, the skilled person will appreciate that other imaging techniques may be used to capture data indicative of a number of items in a container, such as the use of LIDAR, a colour sensor, a contrast sensor, and/or a depth or distance sensor. Additionally or alternatively, other means for determining a number of items in a container may be used. For example, if the weight of the container and the weight of the items stored in the container are known, then the number of items in the container may be determined by weighing the container.

As discussed above, if it is determined that the number of items in a container 808, 810 is equal to a number of items desired to be retrieved from the storage grid 100 (e.g., one item, two items, or any other number of items), then the container 808, 810 may be transported by the conveyor 816 either directly to, for example, a delivery port of the storage grid 100, or to a position from where the container 808, 810 is carried (e.g., by a robotic container-handling vehicle 122) to a delivery port or any other area of the storage grid 100. Additionally or alternatively, the container 808, 810 may be transported to a positioning apparatus 818 (e.g., as described in relation to Fig. 8) situated in the storage grid 100 so that the items in the container may be consolidated in another container.

If, on the other hand, the number of items in the container 808, 810 is determined not to be equal to the number of items desired for retrieval, then the container 808, 810 may be moved (possibly first by a conveyor 816 and then by a robotic container-handling vehicle 122) to a position where the items in the container 808, 810 may be dropped onto the sorting apparatus 802 for further sorting. Before dropping the items in the container 808, 810 onto the sorting apparatus 802, the items may first be centred in a container, or centred directly above the container, by passing the items through the positioning apparatus 818.

### Methods of sorting and positioning

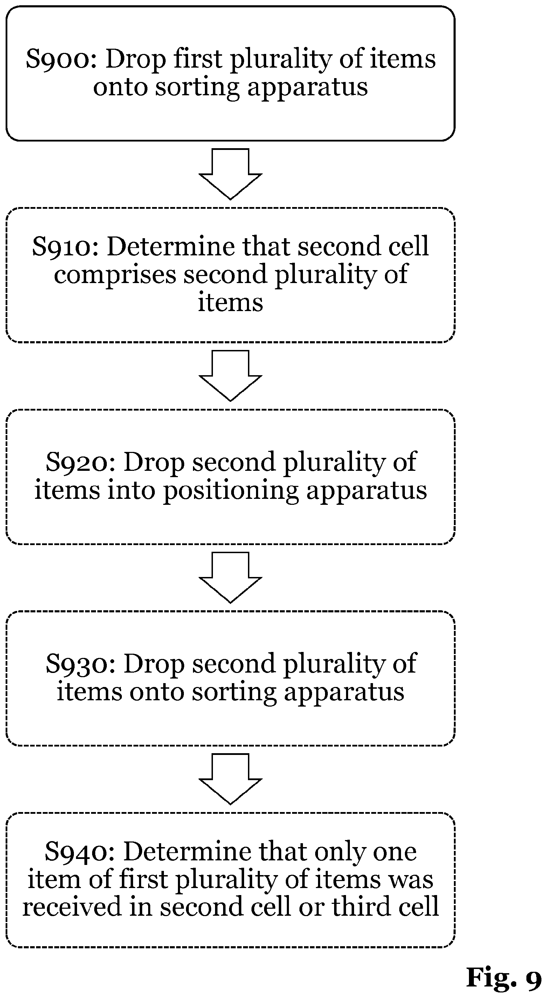

Fig. 9 shows a flow chart of a method of sorting a first plurality of items in an automated storage and retrieval system comprising a sorting apparatus situated in a first cell of a storage grid 100. The automated storage and retrieval system may be as described in relation to Fig. 1 or 8. The sorting apparatus 802 may be as described in relation to any of Figs. 5 and 6A-E. The method depicted in Fig. 9 and described below resembles the sorting process described earlier with reference to Fig. 8.

The method comprises dropping S900 the first plurality of items onto the sorting apparatus 802. As described above with reference to Fig. 8, items may be dropped onto the sorting apparatus 802 by tilting a container 812 that contains the items. The container 812 may be tilted using an item deposition means, such as a tilting mechanism comprising a pneumatic or motorised arm.

By dropping the first plurality of items onto the sorting apparatus 802, each item is guided by the sorting apparatus 802 towards either a second cell or a third cell of the storage grid. The second cell and/or third cell may comprise a container 808, 810 for storing items in the storage grid 100.

The method of Fig. 9 may terminate after step S900. Alternatively, after step S900, the method may proceed to perform a combination of optional steps S910, S920, S930 and S940. For example, the method may proceed to perform:
- steps S910, S930 and S940 in order, and then terminate; or
- steps S910, S920, S930 and S940 in order, and then terminate.

At step S910, the method determines whether the second cell comprises a second plurality of items. For example, the method may comprise capturing, using a camera, an image of the contents of the second cell, and providing the captured image as input to a computer vision algorithm for determining a number of items in the second cell. Alternatively, the method may comprise weighing a container situated in the second cell in order to determine a number of items in the second cell.

If at step S910 it is determined that the second cell comprises a second plurality of items (i.e., if there is more than one item in the second cell), then the method may proceed to step S930. At step S930, the method comprises dropping the second plurality of items onto the sorting apparatus 802. Thus, each of the second plurality of items is guided by the sorting apparatus 802 towards either the second cell or the third cell.

Optionally, after step S910 but before step S930 is performed, the method may first perform step S920. At step S920, the method comprises dropping the second plurality of items onto a positioning apparatus 818 (e.g., the positioning apparatus 702 described with reference to Fig. 7). In this way, the second plurality of items may be centred in a container 820 before being dropped onto the sorting apparatus 802 (e.g., by tilting the container over the sorting apparatus).

Finally, at optional step S940, the method comprises determining that only one item of the first plurality of items was received in the second cell or the third cell. When it is determined that the second or third cell received only one item of the first plurality of items, this item may be transported out of the respective cell for further processing and/or for delivery out of the storage grid 100.

In the above description of the method of Fig. 9, the positioning apparatus is used in conjunction with a sorting apparatus. However, the positioning apparatus may be used independently of any sorting apparatus.

Thus, also disclosed herein is a method of positioning an item in an automated storage and retrieval system (e.g., that described with reference to Fig. 1 or 8) that comprises a positioning apparatus 818 (e.g., that described with reference to Fig. 7) situated in a first cell of a storage grid 100, the first cell above a second cell that is configured to receive an item dropped into the positioning apparatus. The method comprises a step of dropping an item into the positioning apparatus 818. The item may be dropped into the positioning apparatus 818 by tilting, using a tilting mechanism, a container 822 comprising the item.

Also disclosed herein are the following numbered clauses:
1. A sorting apparatus for use in an automated storage and retrieval system, the apparatus comprising:
   a first ramp configured to guide, in a first direction, an item received from the storage system; and
   a second ramp configured to guide, in a second direction different from the first direction, an item received from the storage system.
2. The sorting apparatus of clause 1, wherein the first direction is substantially opposite to or substantially perpendicular to the second direction.
3. The sorting apparatus of clause 1 or 2, wherein the first and second ramps form a plough shape, triangular prism, half-cylinder, elliptical half-cylinder, spherical octant or spheroidal octant.
4. The sorting apparatus of any preceding clause, wherein the first and second ramps are disposed on opposing sides of a vertical plane and wherein the first and second ramps are downwardly sloped with respect to the vertical plane, and optionally wherein the first and second ramps are downwardly sloped with respect to the vertical plane such that a respective end of the first and second ramps that is proximal to the vertical plane is higher than a respective end of the first and second ramps that is distal to the vertical plane.
5. The sorting apparatus of any preceding clause, further comprising a divider between the first and second ramps, wherein the divider is configured to guide an item in either the first or second direction.
6. The sorting apparatus of any preceding clause, wherein the first and second ramps are connected along an edge, and optionally wherein the apparatus is configured such that an item disposed at the edge is approximately as likely to be guided in the first direction by the first ramp as it is to be guided in the second direction by the second ramp.
7. The sorting apparatus of any preceding clause, wherein the apparatus is configured to be received in a cell or a port of the automated storage and retrieval system.
8. An automated storage and retrieval system comprising a storage grid defined by one or more vertical columns of cells, a first cell comprising the sorting apparatus of any preceding clause, wherein:
   the first ramp of the sorting apparatus is configured to guide an item towards a second cell, the second cell adjacent the first cell; and
   the second ramp of the sorting apparatus is configured to guide an item towards a third cell, the third cell adjacent the first cell and different from the second cell.
9. The automated storage and retrieval system of clause 8, wherein the second cell is arranged to receive a first container for storing items in the storage grid, such that an item guided by the first ramp of the sorting apparatus is receivable by the first container, and optionally wherein the third cell is arranged to receive a second container for storing items in the storage grid, such that an item guided by the second ramp of the sorting apparatus is receivable by the second container.
10. The automated storage and retrieval system of clause 8 or 9, further comprising:
   a first camera arranged to capture an image of an item in the second cell; and/or
   a second camera arranged to capture an image of an item in the third cell.
11. The automated storage and retrieval system of any of clauses 8 to 10, further comprising an item deposition means for dropping items onto the sorting apparatus, optionally wherein the item deposition means is a tilting mechanism configured to tilt a container for storing items in the storage grid.
12. The automated storage and retrieval system of any of clauses 8 to 11, further comprising:
   a first conveyor configured to transport an item in the second cell out of the second cell; and/or
   a second conveyor configured to transport an item in the third cell out of the third cell.
13. The automated storage and retrieval system of any of clauses 8 to 12, wherein the automated storage and retrieval system further comprises a light source disposed in the second or third cell arranged to illuminate an inner volume of the respective cell.
14. A positioning apparatus for use in an automated storage and retrieval system and for arranging items in a container of the automated storage and retrieval system, the positioning apparatus comprising:
   a funnel arranged to guide an item placed in the top of the funnel.
15. The positioning apparatus of clause 14, wherein the apparatus is configured to be received in a cell of an automated storage and retrieval system.
16. The automated storage and retrieval system of any of clauses 8 to 13, further comprising the positioning apparatus of clause 14 or 15, wherein the positioning apparatus is configured to receive items stored in the storage and retrieval system and guide items into a container for storing items in the storage and retrieval system.
17. The automated storage and retrieval system of clause 16, further comprising a further item deposition means for dropping items into the positioning apparatus, optionally wherein the further item deposition means is a tilting mechanism configured to tilt a container for storing items in the storage grid.
18. A method of sorting a first plurality of items stored in an automated storage and retrieval system as defined in any of clauses 8 to 13, 16 or 17, the method comprising dropping the first plurality of items onto the sorting apparatus.
19. The method of clause 18, further comprising:
   determining that the second cell comprises a second plurality of items; and
   dropping the second plurality of items onto the sorting apparatus.
20. The method of clause 19 when dependent on clause 14 or 15, the method further comprising dropping the second plurality of items into the positioning apparatus before dropping the second plurality of items onto the sorting apparatus.
21. The method of any of clauses 18 to 20, further comprising determining that only one item of the first plurality of items was received in the second cell or the third cell.
22. The method of any of clauses 18 to 21, wherein dropping items onto the sorting apparatus comprises tilting a container.
23. The method of any of clauses 18 to 22, wherein the first and second plurality of items are held and received in containers for storing the items in the automated storage and retrieval system.
24. An automated storage and retrieval system comprising a storage grid defined by one or more vertical columns of cells, a first cell comprising the positioning apparatus of clause 14 or 15, and a second cell below the first cell, wherein the second cell is configured to receive an item dropped into the positioning apparatus.
25. The automated storage and retrieval system of clause 24, wherein the positioning apparatus is arranged so that when the item is dropped into the positioning apparatus, the item is guided towards the centre of the second cell by the funnel of the positioning apparatus.
26. The automated storage and retrieval system of clause 24 or 25, wherein the second cell comprises a container for storing items in the storage grid.
27. The automated storage and retrieval system of any of clauses 24 to 26, further comprising a tilting mechanism above the positioning apparatus for tilting a container comprising the item.
28. A method of positioning an item in an automated storage and retrieval system as defined in any of clauses 24 to 27, the method comprising dropping an item into the positioning apparatus.
29. The method of clause 28, wherein the automated storage and retrieval system is as defined in clause 27, and wherein dropping the item into the positioning apparatus comprises tilting, by the tilting mechanism, the container comprising the item.

### Penultimate comments

Each possible combination of any of the above-described features, including the clauses, forms part of the present disclosure. A plurality of instances of any feature may also be present.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A sorting apparatus for use in an automated storage and retrieval system, the apparatus comprising:
a first ramp configured to guide, in a first direction, an item received from the storage system; and
a second ramp configured to guide, in a second direction different from the first direction, an item received from the storage system.

2. The sorting apparatus of claim 1, wherein the first direction is substantially opposite to or substantially perpendicular to the second direction.

3. The sorting apparatus of claim 1 or 2, wherein the first and second ramps form a plough shape, triangular prism, half-cylinder, elliptical half-cylinder, spherical octant or spheroidal octant.

4. The sorting apparatus of any preceding claim, wherein the first and second ramps are disposed on opposing sides of a vertical plane and wherein the first and second ramps are downwardly sloped with respect to the vertical plane, and optionally wherein the first and second ramps are downwardly sloped with respect to the vertical plane such that a respective end of the first and second ramps that is proximal to the vertical plane is higher than a respective end of the first and second ramps that is distal to the vertical plane.

5. The sorting apparatus of any preceding claim, further comprising a divider between the first and second ramps, wherein the divider is configured to guide an item in either the first or second direction.

6. The sorting apparatus of any preceding claim, wherein the first and second ramps are connected along an edge, and optionally wherein the apparatus is configured such that an item disposed at the edge is approximately as likely to be guided in the first direction by the first ramp as it is to be guided in the second direction by the second ramp.

7. The sorting apparatus of any preceding claim, wherein the apparatus is configured to be received in a cell or a port of the automated storage and retrieval system.

8. An automated storage and retrieval system comprising a storage grid defined by one or more vertical columns of cells, a first cell comprising the sorting apparatus of any preceding claim, wherein:
the first ramp of the sorting apparatus is configured to guide an item towards a second cell, the second cell adjacent the first cell; and
the second ramp of the sorting apparatus is configured to guide an item towards a third cell, the third cell adjacent the first cell and different from the second cell.

9. The automated storage and retrieval system of claim 8, wherein the second cell is arranged to receive a first container for storing items in the storage grid, such that an item guided by the first ramp of the sorting apparatus is receivable by the first container, and optionally wherein the third cell is arranged to receive a second container for storing items in the storage grid, such that an item guided by the second ramp of the sorting apparatus is receivable by the second container.

10. The automated storage and retrieval system of claim 8 or 9, further comprising:
a first camera arranged to capture an image of an item in the second cell; and/or
a second camera arranged to capture an image of an item in the third cell.

11. The automated storage and retrieval system of any of claims 8 to 10, further comprising an item deposition means for dropping items onto the sorting apparatus, optionally wherein the item deposition means is a tilting mechanism configured to tilt a container for storing items in the storage grid.

12. The automated storage and retrieval system of any of claims 8 to 11, further comprising:
a first conveyor configured to transport an item in the second cell out of the second cell; and/or
a second conveyor configured to transport an item in the third cell out of the third cell.

13. The automated storage and retrieval system of any of claims 8 to 12, wherein the automated storage and retrieval system further comprises a light source disposed in the second or third cell arranged to illuminate an inner volume of the respective cell.

14. A method of sorting a first plurality of items stored in an automated storage and retrieval system as defined in any of claims 8 to 13, the method comprising dropping the first plurality of items onto the sorting apparatus.

15. The method of claim 14, further comprising:
determining that the second cell comprises a second plurality of items; and
dropping the second plurality of items onto the sorting apparatus.
